# EUROPEAN PATENT SPECIFICATION

(11) **EP 3 925 307 B1**
(45) Date of publication and mention of the grant of the patent: **21.12.2022**
(21) Application number: 19704791.3
(22) Date of filing: 11.02.2019
(51) Int. Cl.: H04W 48/18, H04W 16/18, H04W 16/20, H04W 24/02, H04W 24/10, H04W 76/10, H04W 84/12, H04W 88/06

(54) **TECHNIQUE FOR INITIATING A VOICE CALL IN A MOBILE COMMUNICATION NETWORK**
VERFAHREN ZUR EINLEITUNG EINES SPRACHANRUFS IN EINEM MOBILKOMMUNIKATIONSNETZ
TECHNIQUE POUR INITIER UN'APPEL VOCAL DANS UN RÉSEAU DE COMMUNICATION MOBILE

(43) Date of publication of application: 22.12.2021
(73) Proprietor: Telefonaktiebolaget LM Ericsson (publ), 164 83 Stockholm (SE)
(72) Inventor: BÁDER, Attila, 2071 Paty (HU); MAGYAR, Gábor, 2330 Dunaharaszti (HU); SZANISZLÓ, György, 1145 Budapest (HU)
(74) Representative: Ericsson
(86) International application number: PCT/EP2019/053277
(87) International publication number: WO 2020/164682

(56) References cited:
- WO-A1-2012/166110
- GB-A- 2 561 000
- "Wi-Fi calling - extending the reach of VoLTE to Wi-Fi", , 30 January 2015 (2015-01-30), XP055251865, Retrieved from the Internet: URL:https://www.ericsson.com/4a221b/assets /local/news/2015/1/er-wifi-calling.pdf [retrieved on 2019-10-24]
- "3rd Generation Partnership Project; Technical Specification Group Services and System Aspects; Architecture enhancements for non-3GPP accesses (Release 15)", 3GPP STANDARD; TECHNICAL SPECIFICATION; 3GPP TS 23.402, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V15.3.0, 27 March 2018 (2018-03-27), pages 1-314, XP051450526, [retrieved on 2018-03-27] cited in the application

## Description

### Technical Field

The present disclosure generally relates to a technique for initiating a voice call in a mobile communication network while a user device making a call attempt is wirelessly connected to a WiFi access point. In particular, the present disclosure is directed to Voice over WiFi (VoWiFi) calls. Among other things, the present disclosure is directed to the question whether a voice call initiated by a user of a user device shall be performed over a WiFi access point or over a 3rd Generation Partnership Project, 3GPP, radio access network.

### Background

Voice over WiFi (VoWiFi) is a technology which enables to use WiFi hotspots as radio access network (RAN) for voice services in commercial mobile networks. This typically extends the existing Voice over LTE (VoLTE) and other legacy 3rd Generation Partnership (3GPP) radio technologies, UMTS and GSM. Note that both LTE and VoWiFi use voice over IP technology, while 3G and GSM use circuit switched technologies for voice services.

Note that mobile broadband (MBB) services provided by the mobile operators and over-the-top (OTT) service providers can also use WiFi as access network. The MBB services are less integrated with the mobile networks, the network provides transport services, but e.g. not involved in signaling setting up the media.

VoWiFi is deployed by mobile operators because it is possible to easily extend the coverage of the 3GPP radio access networks without expensive investment in remote locations or in shielded locations (indoor, basement). VoWiFi is also used for offloading the 3GPP cells from heavy MBB traffic or cells in hot spots (many users or heavy usage, offices, shopping centers, etc.).

The 3GPP standard TS 23.402 (current version: V15.3.0) specifies the reference architecture for the present disclosure. In other words, details regarding the architecture described in TS 23.402 V15.3.0 may form the basis of the present disclosure and are therefore considered to be known to the skilled person. The mobile handsets (user devices) are connected to the evolved packet core (EPC) over the new S2a and S2b interface for trusted and untrusted access networks, respectively. A new enhanced packet data gateway (ePDG) function covers policy control, charging, authentication and handover between WiFi and 3GPP networks. For setting up a call in WiFi access, IP multimedia subsystem (IMS) and session initiation protocol (SIP) signaling is used in the same way as for the LTE networks.

The WiFi access is simple and relatively cheap but it has the following disadvantages compared to, e.g., LTE networks:
1. Coverage or range of a WiFi hotspot is usually much smaller than that of 3GPP cells; basically it is suitable for a static user.
2. It lacks the radio bearers, and advanced radio options, which ensure quality of service for the user traffic.
3. Handover requires a more complex procedure than that of between 3GPP cells.
4. WiFi radio conditions are not controlled and monitored by the mobile network.

Inter alia, for the above reasons, in the current voice over WiFi solutions the key performance indicators (KPIs) for calls established through WiFi access network (e.g., call setup failure, voice quality, drop rate) are not as good as for calls that are carried out in a 3GPP access network.

According to known solutions for avoiding the above problems, operators apply certain policies for using voice over WiFi service. For example:
- Allow only MBB traffic over WiFi.
- Activate service only to a limited number and type of subscribers in a static manner.
- Deactivate service for certain subscribers, e.g., who have complained through customer service about service quality.

However, these solutions are rather static, not efficient enough and do not guarantee the service quality for the rest of the VoWiFi users.

WO 2012/166110 A1 discloses Devices and methods for selecting an optimal access network in a wireless communications environment, such as when offloading mobile data traffic. A contributing device comprises processing logic configured to generate set of communication environment identification data corresponding to the location of the communication device, to generate a set of observed AN availability and communication performance data corresponding to the location of the communication device and, and to transmit the set of communication environment identification data and the set of observed communication performance data to a server.

### Summary

Accordingly, there is a need for a technique which solves the above problems or other related problems of prior art techniques. Specifically, and without limitation, there is a need for an improved technique for deciding over which radio access network (RAN) an initiated voice call shall be performed.

The invention is defined by the subject-matter of the independent claims. Advantageous embodiments are indicated in the dependent claims.

According to a first aspect, a device for initiating a voice call in a mobile communication network is provided. The device comprises a network interface that is adapted to communicatively couple the device to the mobile communication network, a processor, and a memory. The memory contains instructions executable by the processor to cause the device to detect that a user device performs a call attempt of initiating a voice call over the mobile communication network while being wirelessly connected to a WiFi access point, determine at least one call attempt parameter indicative of a situation and/or environment in which the call attempt is performed and decide, based on a decision criterion, whether the voice call to be initiated shall be forced to be used for training a prediction model. If it is decided that the voice call shall be forced to be used for training the prediction model, the instructions cause the device to initiate the voice call over the WiFi access point as a Voice over WiFi, VoWiFi, call, derive at least one key performance indicator, KPI, from the performed voice call, and provide the at least one call attempt parameter and the at least one KPI to the prediction model for training the prediction model. If it is decided that the voice call shall not be forced to be used for training the prediction model, the instructions cause the device to decide, based on the at least one call attempt parameter and by applying the prediction model, whether the voice call shall be performed over the WiFi access point or over a 3rd Generation Partnership Project, 3GPP, radio access network.

The following description may apply to all aspects described in this disclosure. In particular, the following description concerning the apparatus aspects may not only apply to the apparatus aspects but also to the method aspects described below, where applicable.

The expressions "mobile communication network" and "mobile network" are used synonymously in the present disclosure. The mobile communication network may be an entire mobile communication network according to a 3GPP standard, and, in particular, a mobile network according to the Long Term Evolution (LTE) standard family. In particular, the initiated voice call is managed by a mobile provider and, therefore, differs from calls that are entirely directed over the Internet without the involvement of a mobile provider.

The mobile network, in which the device is operated, may be the mobile network defined in TS 23.402 V15.3.0. The user device may be connected to the mobile network via the S2a or S2b interface defined in TS 23.402 V15.3.0.

For example, the network interface of the device may be configured to communicate with an IP Multimedia Subsystem (IMS) of the mobile network.

The call attempt may be performed by a user of the user device, e.g., by entering a mobile telephone number into a user interface of the user device. The WiFi access point may define a WiFi hotspot in which the user device is located. For example, the WiFi access point may be part of an Internet router in a home or may define a public WiFi hotspot in a public space.

The decision criterion, based on which it is decided whether the voice call shall be forced to be used for training the prediction model, may be a criterion that considers the identity of the user of the user device. In particular, the criterion may consider a user ID suitable for identifying the user. According to one example, the decision criterion comprises a fixed or adaptable factor of voice calls that shall be forced to be used for training the prediction model. The decision may be performed on the basis of said factor by choosing a percentage of voice calls to be used for training, such that the percentage meets the aforementioned factor. For example, every n number of voice calls may be chosen for being forced to be used for training the prediction model, wherein n may be 10, 20, 30, 100, or any other suitable number.

The call attempt parameter may comprise any suitable attribute that further characterizes a property of the call attempt. These attributes may be defined with regard to time, space, user performing the call attempt, user device performing the call attempt, user that shall receive the call, user device that shall receive the call, etc. Further details and examples will be provided below.

When the voice call initiated over the WiFi access point is a VoWiFi call, further details defined in TS 23.402 V15.3.0 may apply. The voice call may be directed via the WiFi access point (AP) to the mobile communication network and, from there, directed to a user device of a receiving party ("receiving user device"), which is either connected to a 3GPP cell (e.g., a base station or eNodeB) or also connected to the mobile network via a WiFi access point. The KPI may be indicative of a quality and/or a performance of the performed voice call. The KPI may be derived during the voice call or after the voice call has finished. Details of parameters that may be used as KPI will be provided below.

The prediction model may apply machine learning for predicting at least one KPI on the basis of training data. In order to perform said prediction and, in particular, in order to improve the prediction, the prediction model may be fed with training data provided, e.g., in the form of the at least one call attempt parameter and the at least one KPI of the performed voice call. The performance and accuracy of the prediction model may depend on the amount of training data received by the prediction model. Details regarding the prediction model are not part of the present disclosure since it is well known in the art how a suitable machine learning prediction model may be designed.

In the step of deciding whether the voice call shall be performed over the WiFi access point or over a 3GPP RAN, the prediction model is applied. In this case, an input parameter of the prediction model may be the at least one call attempt parameter and an output parameter may be at least one KPI. The 3GPP RAN may comprise a 3GPP cell which may be operated, e.g., by an eNodeB or a base station, in a known way, according to a 3GPP standard (e.g., LTE). In a following step, the voice call may be performed over the respective RAN (i.e., WiFi or 3GPP). In case the voice call is performed over the 3GPP RAN, a 3GPP cell to which the user device was previously connected may be used for the voice call.

By implementing the above technique, it can be decided, based on a trainable prediction model, over which RAN the voice call shall be performed. Hence, statistics of previous voice calls may influence this decision, which may improve the decision quality and accuracy.

The instructions may further cause the device to detect that a further user device of a called party (i.e. a receiving user device) is wirelessly connected to a further WiFi access point, determine at least one further call attempt parameter indicative of a situation and/or environment in which the call attempt is performed, and decide, based on a further decision criterion, whether the voice call to be initiated shall be forced to be used for training a further prediction model. If it is decided that the voice call shall be forced to be used for training the further prediction model, the instructions may cause the device to trigger reception of the voice call over the further WiFi access point as a Voice over WiFi, VoWiFi, call, derive at least one further key performance indicator, KPI, from the performed voice call, and provide the at least one further call attempt parameter and the at least one further KPI to the further prediction model for training the further prediction model. If it is decided that the voice call shall not be forced to be used for training the further prediction model, the instructions may cause the device to decide, based on the at least one further call attempt parameter and by applying the further prediction model, whether the voice call shall be received over the further WiFi access point or over a further 3rd Generation Partnership Project, 3GPP, radio access network.

In other words, the process described above with regard to the user device initiating the voice call ("initiating user device") may also be applied on the side of the receiving party ("receiving user device") in case also the receiving user device is connected to the mobile communication network via a WiFi access point (further WiFi access point). Therefore, the details set out above with regard to the process involving the initiating user device may also apply, where applicable, to the process involving the receiving user device. In the above description, the word "further" is only used to differentiate the features related to the receiving user device from the features related to the initiating user device. Apart from that, the expression has no additional meaning.

In view of the above, not only the best RAN for the initiating user device may be chosen but also the best RAN for the receiving user device.

The instructions may be configured such that the step of deciding whether the voice call shall be performed over the WiFi access point or over the 3GPP radio access network comprises determining a prediction value for at least one of the KPIs, wherein it is decided based on the prediction value whether the voice call shall be performed over the WiFi access point or over the 3GPP radio access network.

Each KPI may be provided in the form of a numerical value (numerical KPI, e.g., between 0 and 1 or between 0 and 10) or in the form of a binary value (binary KPI, i.e., 0 or 1). For example, a KPI "call quality" may be expressed as numerical value (e.g., between 0 and 5) whereas a call drop may be expressed by a binary value (no: 0 or yes: 1). For each of the used KPIs, a prediction value may be determined by the prediction model. For binary KPIs, the prediction value may be provided in the form of a probability (i.e., between 0 and 1). For numerical KPIs, the prediction value may be provided in the form of a most likely numerical value, i.e., an expected numerical value (e.g., prediction value for KPI "call quality": 3, in case the "call quality" is indicated by a numerical value between 0 and 5). In case n KPIs are considered, the KPIs may be provided in the form of an n-dimensional vector. Further, the KPI prediction values may be provided in the form of an n-dimensional vector.

The decision based on the prediction value may be performed by considering at least one threshold value (e.g., one threshold value for each KPI prediction value). In one example, the voice call is performed over the WiFi access point only if each KPI prediction value is above (or below) a corresponding predetermined threshold value. In another example, the voice call is performed over the WiFi access point only if a predetermined number of KPI prediction values is above (or below) a corresponding predetermined threshold value.

The instructions may further cause the device to, if it is decided that the voice call shall not be forced to be used for training the prediction model and if it is decided that the voice call shall be performed over the WiFi access point, initiate the voice call over the WiFi access point as a Voice over WiFi, VoWiFi, call, derive at least one key performance indicator, KPI, from the performed voice call, and provide the at least one call attempt parameter and the at least one KPI to the prediction model for training the prediction model.

In this case, although the voice call is not forced to be used for training the prediction model, it is still used for training the prediction model. Hence, it is clear that the expression "shall not be forced to be used for training" does not mean that the voice call cannot be used for training at any circumstances. In other words, if it is decided anyway that the voice call is performed over the WiFi access point, training data may as well be derived and used for training the prediction model. This may improve the prediction quality of the prediction model.

The at least one call attempt parameter and/or the at least one further call attempt parameter may comprise(s) one or more of the following parameters: a user ID suitable for identifying a user of the user device and, optionally, wherein the user ID is at least one of an MSISDN and an international mobile subscriber identity, IMSI, a device ID suitable for identifying the user device, and, optionally, wherein the device ID is at least one of an international mobile equipment identity, IMEI, and an IMEI type allocation code, TAC, a software type and/or software version of an operating system of the user device, a time indicator indicative of a time the call attempt takes place, a user ID of a called party and, optionally, wherein the user ID of the called party is at least one of an MSISDN and an IMSI of the called party, an ID of the WiFi access point to which the user device is connected and, optionally, wherein the ID of the WiFi access point is a media access control, MAC, address of the WiFi access point, and an ID of a 3GPP cell the user device is connected to or was connected to before changing to the WiFi access point.

Each of the above call attempt parameters may help to differentiate between different situations and/or environments in which the call attempt was made. For example, it may be indicative of a particular user device, a particular user, a particular user device type, a particular user device software version, a particular time of day, a particular location in which the call attempt was made, etc. Each of these call attempt parameters may be useful for determining a KPI prediction value for a particular KPI. For example, if it is known that voice calls from a particular WiFi hotspot (having a particular MAC address) tend to fail, the KPI prediction value for a "call drop" probability may be high (e.g., close to 1) in case the call attempt is made from said WiFi hotspot.

The KPI and/or the further KPI may be indicative of at least one of: a call setup success, a call setup time, a call drop, and a call quality.

Each of the above KPIs may be indicative of a performance and/or quality of the voice call. In case a particular KPI is expected not to meet a predetermined requirement (i.e., be below or above a predetermined threshold value), it may be decided to perform the voice call over the 3GPP RAN.

The decision criterion may comprise a predetermined factor of voice calls that are used for training the prediction model.

For example, the predetermined factor may be 1 %, 5 %, 10 %, or 20 %. In case the predetermined factor is 10 % it may be decided that every 10th voice call is used for training the prediction model. Hence, it can be ensured that constantly, a sufficient amount of training data is derived and updated.

The decision criterion may comprise a predetermined factor of voice calls of a particular user ID of a user of the user device, wherein the predetermined factor of voice calls is used for training the prediction model.

In this case, the user ID is considered in the decision whether a voice call is used for training the prediction model. In other words, for every user ID, a particular factor of voice calls may be used for training the prediction model (e.g., 10 %). In this case, it can be ensured that there is sufficient training data for each user ID (i.e., for each user).

The instructions may be configured such that a number of voice calls used for training the prediction model is monitored and the predetermined factor is set on the basis of said number, such that the predetermined factor decreases with an increasing number of voice calls used for training the prediction model.

For example, in a training phase, when no or only relatively few voice calls have been used for training, a higher percentage of calls is used for training than at a later time when the prediction model is already better trained. Thereby, it can be ensured that enough training data for the prediction model is collected in short time and that not too many calls are forced to be used for training when the prediction model is already sufficiently trained.

According to a second aspect, a device for initiating a voice call in a mobile communication network is provided. The device comprises a detecting unit configured to detect that a user device performs a call attempt of initiating a voice call over the mobile communication network while being wirelessly connected to a WiFi access point, a determining unit configured to determine at least one call attempt parameter indicative of a situation and/or environment in which the call attempt is performed, a deciding unit configured to decide, based on a decision criterion, whether the voice call to be initiated shall be forced to be used for training a prediction model, an initiating unit configured to, if it is decided that the voice call shall be forced to be used for training the prediction model, initiate the voice call over the WiFi access point as a Voice over WiFi, VoWiFi, call, a deriving unit configured to, if it is decided that the voice call shall be forced to be used for training the prediction model, derive at least one key performance indicator, KPI, from the performed voice call, a providing unit configured to, if it is decided that the voice call shall be forced to be used for training the prediction model, provide the at least one call attempt parameter and the at least one KPI to the prediction model for training the prediction model, and a further deciding unit configured to, if it is decided that the voice call shall not be forced to be used for training the prediction model, decide, based on the at least one call attempt parameter and by applying the prediction model, whether the voice call shall be performed over the WiFi access point or over a 3rd Generation Partnership Project, 3GPP, radio access network.

All of the above details concerning the device of the first aspect may also apply to the device of the second aspect.

According to a third aspect, a method for initiating a voice call in a mobile communication network is provided. The method comprises detecting that a user device performs a call attempt of initiating a voice call over the mobile communication network while being wirelessly connected to a WiFi access point, determining at least one call attempt parameter indicative of a situation and/or environment in which the call attempt is performed, and deciding, based on a decision criterion, whether the voice call to be initiated shall be forced to be used for training a prediction model. The method further comprises, if it is decided that the voice call shall be forced to be used for training the prediction model, initiating the voice call over the WiFi access point as a Voice over WiFi, VoWiFi, call, deriving at least one key performance indicator, KPI, from the performed voice call, and providing the at least one call attempt parameter and the at least one KPI to the prediction model for training the prediction model. The method further comprises, if it is decided that the voice call shall not be forced to be used for training the prediction model, deciding, based on the at least one call attempt parameter and by applying the prediction model, whether the voice call shall be performed over the WiFi access point or over a 3rd Generation Partnership Project, 3GPP, radio access network.

Each of the above details concerning the device of the first aspect may also apply to the method of the third aspect described below. In other words, the device of the first aspect may be configured to perform the method of the second aspect. The same holds true for the device of the second aspect.

The method may further comprise detecting that a further user device of a called party is wirelessly connected to a further WiFi access point, determining at least one further call attempt parameter indicative of a situation and/or environment in which the call attempt is performed, and deciding, based on a further decision criterion, whether the voice call to be initiated shall be forced to be used for training a further prediction model. The method may further comprise, if it is decided that the voice call shall be forced to be used for training the further prediction model, triggering reception of the voice call over the further WiFi access point as a Voice over WiFi, VoWiFi, call, deriving at least one further key performance indicator, KPI, from the performed voice call, and providing the at least one further call attempt parameter and the at least one further KPI to the further prediction model for training the further prediction model. The method may further comprise, if it is decided that the voice call shall not be forced to be used for training the further prediction model, deciding, based on the at least one further call attempt parameter and by applying the further prediction model, whether the voice call shall be received over the further WiFi access point or over a further 3rd Generation Partnership Project, 3GPP, radio access network.

The step of deciding whether the voice call shall be performed over the WiFi access point or over the 3GPP radio access network may comprise determining a prediction value for at least one of the KPIs, wherein it is decided based on the prediction value whether the voice call shall be performed over the WiFi access point or over the 3GPP radio access network.

The method may further comprise, if it is decided that the voice call shall not be forced to be used for training the prediction model and if it is decided that the voice call shall be performed over the WiFi access point, initiating the voice call over the WiFi access point as a Voice over WiFi, VoWiFi, call, deriving at least one key performance indicator, KPI, from the performed voice call, and providing the at least one call attempt parameter and the at least one KPI to the prediction model for training the prediction model.

The at least one call attempt parameter and/or the at least one further call attempt parameter may comprise(s) one or more of the following parameters: a user ID suitable for identifying a user of the user device and, optionally, wherein the user ID is at least one of an MSISDN and an international mobile subscriber identity, IMSI, a device ID suitable for identifying the user device, and, optionally, wherein the device ID is at least one of an international mobile equipment identity, IMEI, and an IMEI type allocation code, TAC, a software type and/or software version of an operating system of the user device, a time indicator indicative of a time the call attempt takes place, a user ID of a called party and, optionally, wherein the user ID of the called party is at least one of an MSISDN and an IMSI of the called party, an ID of the WiFi access point to which the user device is connected and, optionally, wherein the ID of the WiFi access point is a media access control, MAC, address of the WiFi access point, and an ID of a 3GPP cell the user device is connected to or was connected to before changing to the WiFi access point.

The KPI and/or the further KPI may be indicative of at least one of a call setup success, a call setup time, a call drop, and a call quality.

The decision criterion may comprise a predetermined factor of voice calls that are used for training the prediction model.

The decision criterion may comprise a predetermined factor of voice calls of a particular user ID of a user of the user device, wherein the predetermined factor of voice calls is used for training the prediction model.

A number of voice calls used for training the prediction model may be monitored and the predetermined factor may be set on the basis of said number, such that the predetermined factor decreases with an increasing number of voice calls used for training the prediction model.

According to a fourth aspect, a computer program product is provided. The computer program product comprises program code portions to perform the steps of the method of the third aspect when the computer program product is executed on one or more processing devices.

The computer program product of the fourth aspect may be stored on one or more computer-readable recording media, such as, e.g., optical recording media, magnetic recording media, solid state recording media, etc.

### Brief Description of the Drawings

Further details of embodiments of the technique are described with reference to the enclosed drawings, wherein:
- Fig. 1: shows a flowchart of a method for initiating a voice call in a mobile communication network according to the present disclosure;
- Fig. 2: shows a schematic representation of a device for initiating a voice call in a mobile communication network according to the present disclosure;
- Fig. 3: shows a schematic representation of an architecture in which the device of Fig. 2 can be integrated and in which the method of Fig. 1 can be carried out; and
- Fig. 4: shows a logical structure of a method for initiating a voice call in a mobile communication network according to the present disclosure.

### Detailed Description

In the following description, for purposes of explanation and not limitation, specific details are set forth, such as a specific network environment in order to provide a thorough understanding of the technique disclosed herein. It will be apparent to one skilled in the art that the technique may be practiced in other embodiments that depart from these specific details.

Moreover, when in this disclosure the expression WiFi is used, it may refer to a wireless local area network (WLAN) within the IEEE 802.11 standard family. Hence, a WiFi access point according to the present disclosure is an access point providing a WiFi hotspot according to a wireless communication protocol within the IEEE 802.11 standard family. Similarly, when in the following the expression 3GPP radio access network (RAN) is used (or 3GPP cell) it refers to a radio access network operating under a 3GPP standard, such as a 3G, 4G, or 5G standard (e.g., Long Term Evolution, LTE). Accordingly, a 3GPP RAN may be provided by an eNodeB, a NodeB, or a base station.

Moreover, those skilled in the art will appreciate that the services, functions, steps and units explained herein may be implemented using software functioning in conjunction with a programmed microprocessor, an Application Specific Integrated Circuit (ASIC), a Field Programmable Gate Array (FPGA), a Digital Signal Processor (DSP) or a general purpose computer, e.g., including an Advanced RISC Machine (ARM). It will also be appreciated that, while the following embodiments are primarily described in context with methods and devices, the embodiments may also be embodied in a computer program product as well as in a system comprising a computer processor and memory coupled to the processor, wherein the memory is encoded with one or more programs that may perform the services, functions, steps and implement the units disclosed herein.

Further, in the following, specific devices (in particular a device for initiating a voice call in a mobile communication network) are described, which perform or are configured to perform certain steps of a method. However, it will be appreciated by those skilled in the art that those steps do not necessarily have to be performed by one single device but may be performed by different devices that are communicatively coupled with each other. For example, more than one device may be provided and/or more than one processor may be provided, wherein the steps are distributed among the devices and/or processors. Further, a cloud computing environment may be used for performing the steps of one or more of the methods described herein.

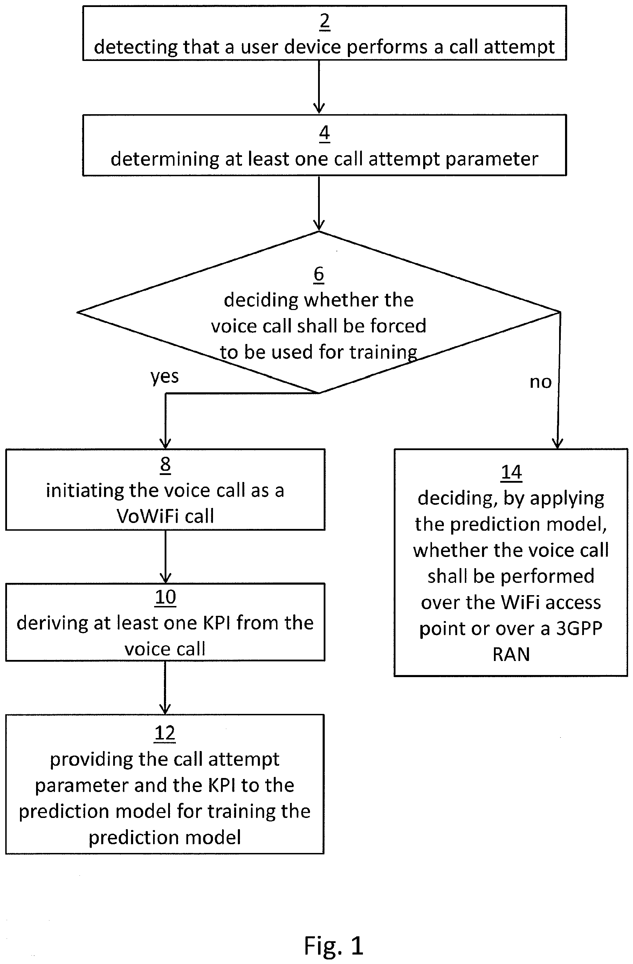

Fig. 1 shows a flowchart of the general structure of a method for initiating a voice call in a mobile communication network, according to the present disclosure.

In a first step 2 of the method, it is detected that a user device performs a call attempt of initiating a voice call over the mobile communication network while being wirelessly connected to a WiFi access point. In a second step 4, at least one call attempt parameter is determined. The call attempt parameter is indicative of a situation and/or environment in which the call attempt is performed. In a third step 6, it is decided, based on a decision criterion, whether the voice call to be initiated shall be forced to be used for training a prediction model.

If it is decided that the voice call shall be forced to be used for training the prediction model ("yes" in Fig. 1), the voice call is initiated 8 over the WiFi access point as a Voice over WiFi, VoWiFi, call. Further, at least one key performance indicator, KPI, is derived 10 from the performed voice call. The at least one call attempt parameter and the at least one KPI are provided 12 to the prediction model for training the prediction model. On the other hand, if it is decided that the voice call shall not be forced to be used for training the prediction model ("no" in Fig. 1), it is decided 14, based on the at least one call attempt parameter and by applying the prediction model, whether the voice call shall be performed over the WiFi access point or over a 3rd Generation Partnership Project, 3GPP, radio access network.

The method steps explained above are not necessarily performed in the indicated order (e.g., 2 to 12). For example, step 4 may be carried out before or after step 6. Further, step 10 may be carried out before or after step 8. Hence, the indicated order of steps of Fig. 1 is merely one exemplary chronological order of carrying out the steps of the method.

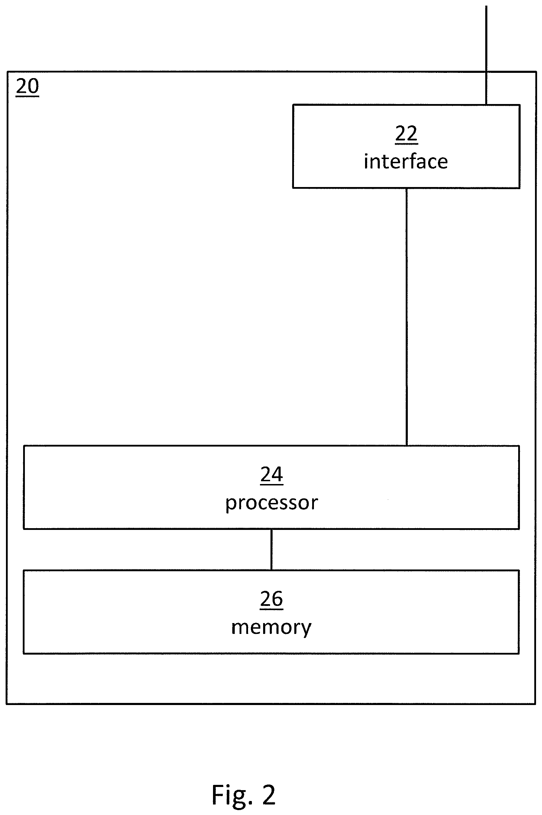

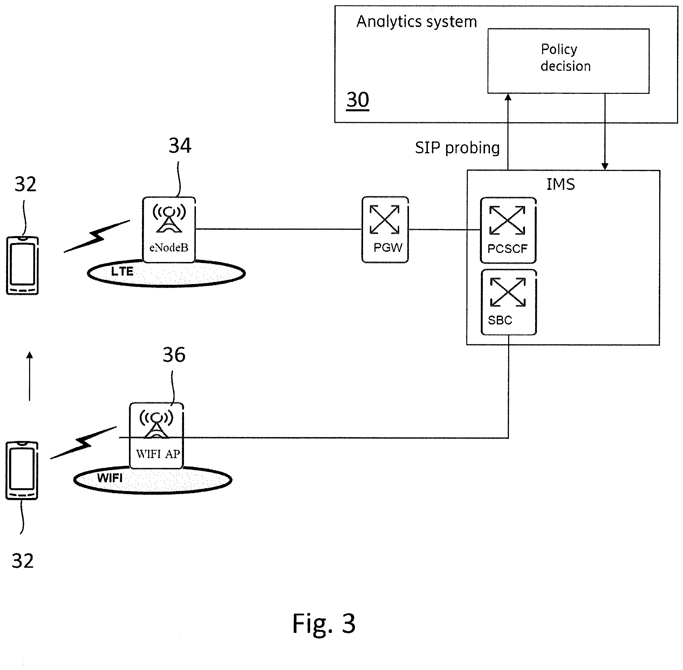

Fig. 2 shows a schematic structure of a device 20 for initiating a voice call in a mobile communication network, according to the present disclosure. The device 20 comprises a network interface 22 that is adapted to communicatively couple the device 20 to the mobile communication network. The network interface 22 of the device 20 may be configured to communicate with an IP Multimedia Subsystem (IMS) of the mobile network (see Fig. 3). The device further comprises a processor 24 and a memory 26 containing instructions executable by the processor 24 to cause the device to perform the method shown in Fig. 1.

Fig. 3 shows an architecture in which the device 20 of Fig. 2 may be integrated, e.g., in the form of the "analytics system" 30 shown in Fig. 3. A user device 32 can be connected to an eNodeB 34 and/or a WiFi access point 36, depending on the presence of a radio signal with sufficient signal strength and signal quality. In an embodiment, the user device 32 comprises a WiFi interface for connecting the user device 32 to a WiFi access point 36 (and via the WiFi access point to the mobile communication network) and a 3GPP interface for connecting the user device 32 to a 3GPP cell 34 via a 3GPP RAN (and via the 3GPP RAN to the mobile communication network). Hence, the user device 32 may be capable of connecting to the mobile communication network via different RANs. In other words, e.g., depending on a signal strength of a WiFi signal as compared to a 3GPP signal (e.g., an LTE signal), the user device 32 can chose whether to connect to the WiFi access point 36 (via WiFi RAN) or to the 3GPP cell 34 (via 3GPP RAN). The present disclosure is directed to the situation that the user device 32 is connected to the WiFi access point 36 when a call attempt is made.

In the example of Fig. 3, the WiFi access point 36 is operating under a WLAN standard of the IEEE 802.11 family and is an example for a WiFi access point according to the present disclosure. The WiFi access point 36 provides a WiFi radio access network (RAN). The eNodeB 34 is an example of a device providing a 3GPP cell and, thereby, a 3GPP RAN. The present disclosure is not limited to the example of Fig. 3 and, e.g., the 3GPP RAN may be provided by a NodeB.

Both the WiFi access point 36 and the eNodeB 34 are configured to connect the user device 32 to the mobile communication network. The eNodeB 34 connects the user device 32 to an IP Multimedia Subsystem (IMS) via Packet Data Network Gateway (PGW) .

The call attempt parameters used by the analytics system 30 are obtained from the SIP signaling messages. SIP signaling is captured by network interface probes. One technically feasible option is capturing SIP at the Proxy Call Session Control Function (PCSCF) node in the IMS system, more specifically at the Mw network interface between the PCSCF and Call Session Control Function (CSCF) nodes.

The SIP signaling of the 3GPP access networks are processed by PCSCF node in the IMS. The non-3GPP access systems, e.g., WIFI Access Points (APs) are connected through the Session Border Control (SBC) node or functionality, which provides interoperability between 3GPP and non-3GPP SIP signaling. In this way the SIP signaling of the mobiles (i.e., user devices) attached either to 3GPP or WIFI are visible at and captured by the same probe and at the same IF.

The analytics system 30, which is an example of the device 20, implements the prediction model described herein and, in particular, carries out the method of Fig. 1. Further details regarding the method and the device are provided below.

The technique according to the present disclosure is focusing on voice calls initiated while being on WiFi access technology (i.e., while being wirelessly connected to a WiFi access point). These calls are routed (through the WiFi access) to the IMS nodes of the operator. According to an embodiment, the call attempt has the following parameters that are applied later in the learning process and finally for deciding whether the call will remain on WiFi or whether the user is forced to 3GPP access due to a high probability that the call quality might be bad if staying on WiFi.

The call attempt parameters used in an embodiment are at least one or more of the following, but are not limited to this set. For example, in an embodiment, all of the following call attempt parameters are used:
- User ID (e.g., MSISDN or IMSI): the unique identifier of the end user (i.e. the user of the user device performing a call attempt);
- Device ID (e.g., IMEI TAC): the identifier of the user device (e.g., handset, user equipment), optionally along with its software version;
- Time and day: exact time and day of the call setup;
- Called party ID (MSISDN or IMSI): the unique identifier of the called party (i.e., of a receiving user), can be outside of the operator coverage;
- WiFi access point ID: the identifier of the WiFi access point the user is using (e.g., MAC address, etc.); and
- Last known 3GPP cell id: the last 3GPP cell ID the user was visiting before going to WiFi access.

According to an embodiment, the proposed technique is applied for both legs of a voice call (originating (i.e., initiating) and terminating (i.e., receiving)), separately, given that the particular user for the leg is in the operator's domain. In case both users are subscribers of the mobile network operator, and they are both on WiFi, both ends of the call are inspected whether to reroute to 3GPP.

The above parameters of the call setup were included in the prediction framework for the following reasons:
- User ID: The prediction model is built for each individual, namely user behavior.
- Device ID: There can be common (temporary) software or hardware problems in certain handsets in the procedure of handling voice over IP calls.
- Time and day and called party ID: These parameters help to predict (in a hidden layer) the call duration, which then can serve as a good input for the KPI predictions (longer calls can have more troubles by their nature). Time and day can also serve to predict background traffic.
- WiFi access point and last 3GPP cell ID: Location of the user, and the quality of the WiFi solution, latter is one of the most important parameters.

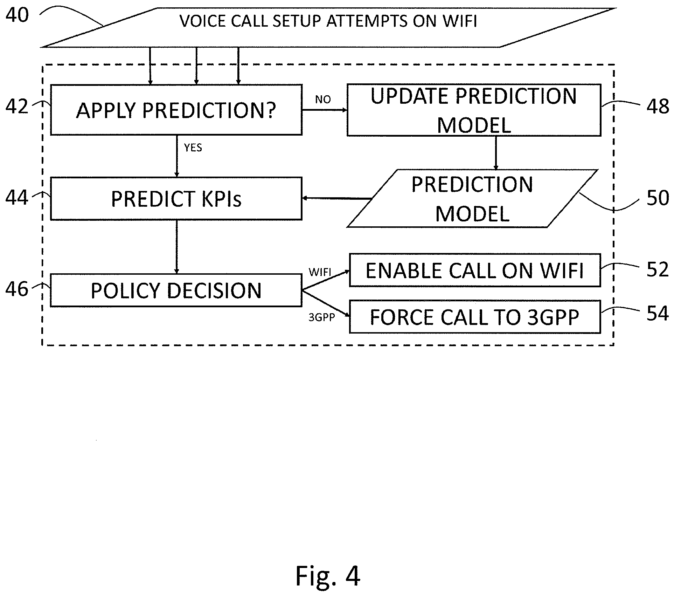

Fig. 4 shows the logical structure (i.e. a logical system) of the method discussed above with reference to Fig. 2. Thus, the representation and below discussion of Fig. 4 may be regarded as an embodiment of the method of Fig. 2. Further, each of the components 40 to 54 may be regarded as respective units of a device for initiating a voice call in a mobile communication network, according to the present disclosure. For example, the "apply prediction?" component 42 may be regarded as deciding unit for deciding, based on a decision criterion, whether the voice call to be initiated shall be forced to be used for training a prediction model.

A component 40 detects voice call setup attempts on WiFi. In other words, the component 40 detects that a user device performs a call attempt of initiating a voice call over a mobile communication network while being wirelessly connected to a WiFi access point.

A component 42 is concerned with the decision on prediction. In the chart of Fig. 4, the input data (call attempt parameters) arrive to the "apply prediction?" decision component 42. It is desirable to continuously separate sufficient data for training the prediction model to maintain its accuracy. Since the WiFi call quality largely depends on individual factors per user (user ID, called party, WiFi quality), in an embodiment, the input data is sampled per user, and a factor (a ratio of attempts to be used for training, vs. rest for prediction) is applied per user. In practice during the setup of the device a higher ratio of attempts should be used (per user) for training, e.g., 50 to 100 %, while when the device is trained, fewer continuous training samples are satisfactory (per user), e.g., 10 to 50 %.

If a call attempt data is decided to be training data (i.e. if it is decided that the voice call shall be forced to be used for training the prediction model, "NO" in Fig. 4), the call will remain on WiFi, and when the call is finished, the key performance indicators (KPIs) detected by the analytics system using WiFi connection for access are attached to the call record and this extended record will be used to update the prediction model 50 by means of the update prediction model component 48, see later below.

If prediction is decided to be applied for a call attempt ("YES" in Fig. 4), the prediction model 50 is applied for the actual input data (call attempt parameters) and a KPI vector describing the call quality is estimated by using the model 50, see later below. Then at the policy decision component 46 the call may be rerouted to 3GPP access depending on operator preference.

The prediction model 50 according to the embodiment of Fig. 4 is a machine learning driven model that can be continuously updated with new training data for better prediction capabilities and naturally can be used to predict the call KPIs based on a new input parameter set. In case of training, the input data is extended with the measured call KPIs (after the call) and the machine learning framework adjusts/builds the prediction model according the training data. When there has been sufficient training data entered to the machine learning framework, the model 50 can be used for prediction. In case of prediction, the user of the model only gives the input parameters (the WiFi call attempt parameters), and the system can estimate the call quality KPIs based on the model 50 and the given input parameters.

In the embodiment of Fig. 4, the following call KPIs are used:
- Call setup success (probability, between 0-1)
- Call setup time (sec)
- Call drop (probability, between 0-1)
- Call quality (MOS, mean opinion score, typically between 1-5)

In case of model update (by update prediction model component 48), the VoWiFi call attempt parameters together with the measured call KPI values are fed to the machine learning model 50 to use this sample data in the training process. This happens after the call has finished and the appropriate KPIs could be measured by the analytics system.

In case of actual KPI prediction by the predict KPIs component 44 ("YES" in Fig. 4), the VoWiFi call attempt parameters are sent to the model 50 and the model 50 can return an estimate of the call KPI values for the particular call attempt assuming that it will take place using WiFi access. This prediction happens just before establishing the call, before the call setup.

The predicted KPIs just before establishing the voice call are sent to the policy decision component 46, where, based on the operator's preference, the decision is made whether the call should stay on WiFi or should be rerouted to 3GPP. This decision is a function that uses the predicted KPI values as arguments and returns a binary value (WiFi or 3GPP access to be used).

An example function is as follows:
IF call_drop_estimate>0.2 OR call_setup_success_estimate<0.95 OR call_quality_estimate<4 OR call_setup_time_estimate>3 THEN <use 3GPP> ELSE <use WiFi>

According to the embodiment of Fig. 4, the policy decision function is adjustable. Note that it can occur that there is only WiFi and no 3GPP coverage in an area. Therefore, the above policy may be applied only to those sessions and WiFi access points (APs) for which information regarding the last 3GPP location exists.

After the policy decision component 46 has carried out the policy decision regarding the used RAN, depending on the decision, the call is enabled and performed on WiFi in the enable call on WiFi component 52 or the call is enabled and performed via 3GPP in the force call to 3GPP component 54.

In the following, a use case example is described. A subscriber is usually attached to the home WiFi when the subscriber is at home. Since the VoWiFi service is activated, incoming and outgoing calls are established on WiFi and not a 3GPP (2G, 3G, 4G) access network. In most of the cases there is no issue with the service quality. In the mornings, the subscriber starts calling colleagues in the office, sits in the car and heads to the office. When the subscriber leaves the hotspot, the ongoing calls attempt to hand over to the LTE network. Due to technical issues, about 30 % of the calls are dropped during this handover. Besides, the voice quality is also bad in the car. Based on the user ID, location, called parties, time, after learning the issue, the analytics system (i.e., the device) according to the present disclosure makes the decision and forces the calls initiated in the morning to set up on LTE network instead of WiFi, in order to avoid the problematic handover procedure and voice quality issue. The calls are set up on WiFi in other time periods, when the subscriber usually does not leave the WiFi coverage. Still about 10 % of the cases the calls are set (i.e., forced) on WiFi, in order to learn if the above-mentioned handover issue is solved.

According to embodiments of the present disclosure, the device and method improving the required level of Quality of Service in mobile telecommunication networks for voice over WiFi solution includes a machine learning-based analytical module that continuously monitors and predicts the service quality of the subscribers using voice over WiFi solution using a predefined set of voice call quality KPIs. According to embodiments of the present disclosure, the device and method employ a flexible decision-making module using the estimated call quality related KPIs which offers the operators to control the setup of the calls using different radio network technology based on the operator preference.

The training methodology may be running in the background continuously for the entire network. The training methodology may apply the above-mentioned policy only to an adjustable ratio of the sessions in order to provide enough training samples for the machine learning algorithm (leaving a small but significant amount of the calls setup on VoWiFi, even in case of bad estimated service KPIs).

As can be seen from the above, in embodiments of the present disclosure, a device and method are provided that may improve the required level of Quality of Service in mobile telecommunication networks for voice over WiFi solution. The system contains an analytical module (prediction model) that may continuously monitor and predict the service quality of the subscribers using voice over WiFi solution. Using machine learning methods with appropriate training samples, the device may identify the conditions (locations, users, devices, etc.) when service quality degradation is expected with high probability. The training may be running in the background continuously for the entire network. Based on the actual dynamic state of the prediction model, the system may be able to estimate the voice call quality related KPIs for each call in the call setup phase. The solution includes a flexible decision-making module using the estimated call quality related KPIs that may offer the operators to control the setup of the calls using different radio network technology based on the operator preference. In case that service degradation is expected, the calls can automatically be enforced in legacy 2G, 3G or 4G 3GPP access networks, where the service quality is guaranteed, instead of using voice over WiFi (VoWiFi). The solution allows using the spectrum efficient VoWiFi solution in a way that may result in better service quality in average. It may automatically identify the calls for which the expected QoS is bad and by forcing these calls to 3GPP network, ensures good QoS for these calls as well. It may automatically detects the subscribers, terminal types, location, namely the source of the problem of the bad service quality in WiFi. The solution is highly adaptive and may accommodate to network changes and/or changes in user profile, behavior, etc., via its adaptive and continuous learning module. It may use a limited set of calls for training and provides solution to the majority of the calls. The number of calls needed for training may depend on the identified root cause, i.e., if the device type is the reason (a bad phone software version), a significantly smaller sample size for training may be enough compared to the case when the WiFi location itself is faulty.

The training may be performed to be able to reflect any change in the infrastructure. The training process happens in the background and no manual parameter adjustments or extra procedure are necessary to be carried out for proper functioning of the system. The solution is fast, allowing decision making right also before call establishment. The probability threshold where a call is rerouted to 3GPP may be adjustable in the system based on the preferred operator policy. For example, in a conservative case calls with only a 10 % probability of call drop can already be rerouted to 3GPP. The policy settings may be left configurable for the operator.

Many advantages of the present disclosure will be fully understood from the foregoing description, and it will be apparent that various changes may be made in the form, construction and arrangement of the units and devices without departing from the scope of the present disclosure and/or without sacrificing all of its advantages. Since the embodiments can be varied in many ways, it will be recognized that the present disclosure should be limited only by the scope of the appended claims.

## Claims

1. A device (20) configured to initiate a voice call in a mobile communication network, the device (20) comprising:
a network interface (22) that is adapted to communicatively couple the device (20) to the mobile communication network;
a processor (24); and
a memory (26) containing instructions executable by the processor (24) to cause the device (20) to:
detect that a user device (32) performs a call attempt of initiating a voice call over the mobile communication network while being wirelessly connected to a WiFi access point (36);
determine at least one call attempt parameter indicative of a situation and/or environment in which the call attempt is performed;
decide, based on a decision criterion, whether the voice call to be initiated shall be forced to be used for training a prediction model;
if it is decided that the voice call shall be forced to be used for training the prediction model:
- initiate the voice call over the WiFi access point (36) as a Voice over WiFi, VoWiFi, call,
- derive at least one key performance indicator, KPI, from the performed voice call, and
- provide the at least one call attempt parameter and the at least one KPI to the prediction model for training the prediction model; and
if it is decided that the voice call shall not be forced to be used for training the prediction model:
- decide, based on the at least one call attempt parameter and by applying the prediction model, whether the voice call shall be performed over the WiFi access point (36) or over a 3rd Generation Partnership Project, 3GPP, radio access network (34).

2. The device (20) of claim 1, wherein the instructions further cause the device (20) to:
detect that a further user device of a called party is wirelessly connected to a further WiFi access point;
determine at least one further call attempt parameter indicative of a situation and/or environment in which the call attempt is performed;
decide, based on a further decision criterion, whether the voice call to be initiated shall be forced to be used for training a further prediction model;
if it is decided that the voice call shall be forced to be used for training the further prediction model:
- trigger reception of the voice call over the further WiFi access point as a Voice over WiFi, VoWiFi, call,
- derive at least one further key performance indicator, KPI, from the performed voice call, and
- provide the at least one further call attempt parameter and the at least one further KPI to the further prediction model for training the further prediction model; and
if it is decided that the voice call shall not be forced to be used for training the further prediction model:
- decide, based on the at least one further call attempt parameter and by applying the further prediction model, whether the voice call shall be received over the further WiFi access point or over a further 3rd Generation Partnership Project, 3GPP, radio access network.

3. The device (20) of claim 1 or 2, wherein the instructions are configured such that the step of deciding whether the voice call shall be performed over the WiFi access point (36) or over the 3GPP radio access network (34) comprises:
determining a prediction value for at least one of the KPIs, wherein it is decided based on the prediction value whether the voice call shall be performed over the WiFi access point (36) or over the 3GPP radio access network (34).

4. The device (20) of any of claims 1 to 3, wherein the instructions further cause the device (20) to, if it is decided that the voice call shall not be forced to be used for training the prediction model and if it is decided that the voice call shall be performed over the WiFi access point (36):
initiate the voice call over the WiFi access point (36) as a Voice over WiFi, VoWiFi, call;
derive at least one key performance indicator, KPI, from the performed voice call; and
provide the at least one call attempt parameter and the at least one KPI to the prediction model for training the prediction model.

5. The device (20) of any of claims 1 to 4, wherein the at least one call attempt parameter and/or the at least one further call attempt parameter comprise(s) one or more of the following parameters:
a user ID suitable for identifying a user of the user device (32) and, optionally, wherein the user ID is at least one of an MSISDN and an international mobile subscriber identity, IMSI;
a device ID suitable for identifying the user device (32), and, optionally, wherein the device ID is at least one of an international mobile equipment identity, IMEI, and an IMEI type allocation code, TAC;
a software type and/or software version of an operating system of the user device (32);
a time indicator indicative of a time the call attempt takes place;
a user ID of a called party and, optionally, wherein the user ID of the called party is at least one of an MSISDN and an IMSI of the called party;
an ID of the WiFi access point to which the user device is connected and, optionally, wherein the ID of the WiFi access point is a media access control, MAC, address of the WiFi access point; and
an ID of a 3GPP cell the user device (32) is connected to or was connected to before changing to the WiFi access point (36).

6. The device (20) of any of claims 1 to 5, wherein the KPI and/or the further KPI is/are indicative of at least one of:
a call setup success;
a call setup time;
a call drop; and
a call quality.

7. The device (20) of any of claims 1 to 6, wherein the decision criterion comprises a predetermined factor of voice calls that are used for training the prediction model or
wherein the decision criterion comprises a predetermined factor of voice calls of a particular user ID of a user of the user device (32), wherein the predetermined factor of voice calls is used for training the prediction model.

8. The device (20) of claim 7, wherein the instructions are configured such that a number of voice calls used for training the prediction model is monitored and the predetermined factor is set on the basis of said number, such that the predetermined factor decreases with an increasing number of voice calls used for training the prediction model.

9. A method for initiating a voice call in a mobile communication network, the method being performed by a device (20) configured to initiate a voice call in a mobile communication network and the method comprising:
detecting (2) that a user device (32) performs a call attempt of initiating a voice call over the mobile communication network while being wirelessly connected to a WiFi access point (36);
determining (4) at least one call attempt parameter indicative of a situation and/or environment in which the call attempt is performed;
deciding (6), based on a decision criterion, whether the voice call to be initiated shall be forced to be used for training a prediction model;
if it is decided that the voice call shall be forced to be used for training the prediction model:
- initiating (8) the voice call over the WiFi access point (36) as a Voice over WiFi, VoWiFi, call,
- deriving (10) at least one key performance indicator, KPI, from the performed voice call, and
- providing (12) the at least one call attempt parameter and the at least one KPI to the prediction model for training the prediction model; and
if it is decided that the voice call shall not be forced to be used for training the prediction model:
- deciding (14), based on the at least one call attempt parameter and by applying the prediction model, whether the voice call shall be performed over the WiFi access point (36) or over a 3rd Generation Partnership Project, 3GPP, radio access network (34).

10. The method of claim 9, further comprising:
detecting that a further user device of a called party is wirelessly connected to a further WiFi access point;
determining at least one further call attempt parameter indicative of a situation and/or environment in which the call attempt is performed;
deciding, based on a further decision criterion, whether the voice call to be initiated shall be forced to be used for training a further prediction model;
if it is decided that the voice call shall be forced to be used for training the further prediction model:
- triggering reception of the voice call over the further WiFi access point as a Voice over WiFi, VoWiFi, call,
- deriving at least one further key performance indicator, KPI, from the performed voice call, and
- providing the at least one further call attempt parameter and the at least one further KPI to the further prediction model for training the further prediction model; and
if it is decided that the voice call shall not be forced to be used for training the further prediction model:
- deciding, based on the at least one further call attempt parameter and by applying the further prediction model, whether the voice call shall be received over the further WiFi access point or over a further 3rd Generation Partnership Project, 3GPP, radio access network.

11. The method of claim 9 or 10, wherein the step of deciding whether the voice call shall be performed over the WiFi access point (36) or over the 3GPP radio access network (34) comprises:
determining a prediction value for at least one of the KPIs, wherein it is decided based on the prediction value whether the voice call shall be performed over the WiFi access point (36) or over the 3GPP radio access network (34).

12. The method of any of claims 9 to 11, further comprising, if it is decided that the voice call shall not be forced to be used for training the prediction model and if it is decided that the voice call shall be performed over the WiFi access point (36):
initiating the voice call over the WiFi access point as a Voice over WiFi, VoWiFi, call;
deriving at least one key performance indicator, KPI, from the performed voice call; and
providing the at least one call attempt parameter and the at least one KPI to the prediction model for training the prediction model.

13. The method of any of claims 9 to 12, wherein the at least one call attempt parameter and/or the at least one further call attempt parameter comprise(s) one or more of the following parameters:
a user ID suitable for identifying a user of the user device (32) and, optionally, wherein the user ID is at least one of an MSISDN and an international mobile subscriber identity, IMSI;
a device ID suitable for identifying the user device (32), and, optionally, wherein the device ID is at least one of an international mobile equipment identity, IMEI, and an IMEI type allocation code, TAC;
a software type and/or software version of an operating system of the user device (32);
a time indicator indicative of a time the call attempt takes place;
a user ID of a called party and, optionally, wherein the user ID of the called party is at least one of an MSISDN and an IMSI of the called party;
an ID of the WiFi access point (36) to which the user device is connected and, optionally, wherein the ID of the WiFi access point is a media access control, MAC, address of the WiFi access point (36); and
an ID of a 3GPP cell the user device (32) is connected to or was connected to before changing to the WiFi access point.

14. A computer program product comprising program code portions to perform the steps of any of claims 9 to 13 when the computer program product is executed on one or more processing devices.

15. The computer program product of claim 14, stored on one or more computer-readable recording media.

## Patentansprüche

1. Vorrichtung (20), die zum Einleiten eines Sprachanrufs in einem Mobilkommunikationsnetzwerk konfiguriert ist, wobei die Vorrichtung (20) umfasst:
eine Netzwerkschnittstelle (22), die so ausgelegt ist, dass sie die Vorrichtung (20) kommunikativ mit dem Mobilkommunikationsnetzwerk koppelt;
einen Prozessor (24); und
einen Speicher (26), der Anweisungen enthält, die vom Prozessor (24) ausgeführt werden können, um die Vorrichtung (20) zu veranlassen zum:
Erkennen, dass eine Benutzervorrichtung (32) einen Anrufversuch zum Einleiten eines Sprachanrufs über das Mobilkommunikationsnetzwerk durchführt, während sie mit einem WiFi-Zugangspunkt (36) drahtlos verbunden ist;
Bestimmen mindestens eines Anrufversuchsparameters, der eine Situation und/oder eine Umgebung angibt, in welcher der Anrufversuch durchgeführt wird;
Entscheiden, ob der einzuleitende Sprachanruf zwangsweise zum Trainieren eines Vorhersagemodells verwendet werden soll, basierend auf einem Entscheidungskriterium;
falls entschieden wird, dass der Sprachanruf zwangsweise zum Trainieren des Vorhersagemodells verwendet werden soll:
- Einleiten des Sprachanrufs über den WiFi-Zugangspunkt (36) als einen Sprache-über-WiFi- , VoWiFi-,Anruf,
- Ableiten mindestens eines Hauptleistungsindikators, KPI, aus dem durchgeführten Sprachanruf, und
- Bereitstellen des mindestens einen Anrufversuchsparameters und des mindestens einen KPI für das Vorhersagemodell zum Trainieren des Vorhersagemodells; und
falls entschieden wird, dass der Sprachanruf nicht zwangsweise zum Trainieren des Vorhersagemodells verwendet werden soll:
- Entscheiden, ob der Sprachanruf über den WiFi-Zugangspunkt (36) oder über ein Funkzugangsnetzwerk (34) des Partnerschaftsprojekts der dritten Generation, 3GPP, durchgeführt werden soll, basierend auf dem mindestens einen Anrufversuchsparameter und durch Anwenden des Vorhersagemodells.

2. Vorrichtung (20) nach Anspruch 1, wobei die Anweisungen die Vorrichtung (20) ferner veranlassen zum:
Erkennen, dass eine weitere Benutzervorrichtung eines angerufenen Teilnehmers drahtlos mit einem weiteren WiFi-Zugangspunkt verbunden ist;
Bestimmen mindestens eines weiteren Anrufversuchsparameters, der eine Situation und/oder eine Umgebung angibt, in welcher der Anrufversuch durchgeführt wird;
Entscheiden, ob der einzuleitende Sprachanruf zwangsweise zum Trainieren eines weiteren Vorhersagemodells verwendet werden soll, basierend auf einem weiteren Entscheidungskriterium;
falls entschieden wird, dass der Sprachanruf zwangsweise zum Trainieren des weiteren Vorhersagemodells verwendet werden soll:
- Auslösen des Empfangs des Sprachanrufs über den weiteren WiFi-Zugangspunkt als einen Spracheüber-WiFi-,VoWiFi-,Anruf,
- Ableiten mindestens eines weiteren Hauptleistungsindikators, KPI, aus dem durchgeführten Sprachanruf, und
- Bereitstellen des mindestens einen weiteren Anrufversuchsparameters und des mindestens einen weiteren KPI für das weitere Vorhersagemodell zum Trainieren des weiteren Vorhersagemodells; und falls entschieden wird, dass der Sprachanruf nicht zwangsweise zum Trainieren des weiteren Vorhersagemodells verwendet werden soll:
- Entscheiden, ob der Sprachanruf über den weiteren WiFi-Zugangspunkt oder über ein weiteres Funkzugangsnetzwerk des Partnerschaftsprojekts der dritten Generation, 3GPP, empfangen werden soll, basierend auf dem mindestens einen weiteren Anrufversuchsparameter und durch Anwenden des weiteren Vorhersagemodells.

3. Vorrichtung (20) nach Anspruch 1 oder 2, wobei die Anweisungen derart konfiguriert sind, dass der Schritt des Entscheidens, ob der Sprachanruf über den WiFi-Zugangspunkt (36) oder über das 3GPP-Funkzugangsnetzwerk (34) durchgeführt werden soll, umfasst:
Bestimmen eines Vorhersagewerts für mindestens einen der KPIs, wobei basierend auf dem Vorhersagewert entschieden wird, ob der Sprachanruf über den WiFi-Zugangspunkt (36) oder über das 3GPP-Funkzugangsnetzwerk (34) durchgeführt werden soll.

4. Vorrichtung (20) nach einem der Ansprüche 1 bis 3, wobei die Anweisungen, falls entschieden wird, dass der Sprachanruf nicht zwangsweise zum Trainieren des Vorhersagemodells verwendet werden soll, und falls entschieden wird, dass der Sprachanruf über den WiFi-Zugangspunkt (36) durchgeführt werden soll, die Vorrichtung (20) ferner veranlassen zum:
Einleiten des Sprachanrufs über den WiFi-Zugangspunkt (36) als einen Sprache-über-WiFi-,VoWiFi-,Anruf, Ableiten mindestens eines Hauptleistungsindikators, KPI, aus dem durchgeführten Sprachanruf; und
Bereitstellen des mindestens einen Anrufversuchsparameters und des mindestens einen KPI für das Vorhersagemodell zum Trainieren des Vorhersagemodells.

5. Vorrichtung (20) nach einem der Ansprüche 1 bis 4, wobei der mindestens eine Anrufversuchsparameter und/oder der mindestens eine weitere Anrufversuchsparameter einen oder mehrere der folgenden Parameter umfasst/umfassen:
eine Benutzer-ID, die zum Identifizieren eines Benutzers der Benutzervorrichtung (32) geeignet ist, und wobei die Benutzer-ID optional mindestens eine von einer MSISDN und einer internationalen Mobilteilnehmerkennung, IMSI, ist;
eine Vorrichtungs-ID, die zum Identifizieren der Benutzervorrichtung (32) geeignet ist, und wobei die Vorrichtungs-ID optional mindestens eine von einer internationalen Mobilgerätekennung, IMEI, und einem IMEI-Typ-Zuweisungscode, TAC, ist;
einen Softwaretyp und/oder eine Softwareversion eines Betriebssystems der Benutzervorrichtung (32);
einen Zeitindikator, der eine Zeit angibt, zu welcher der Anrufversuch stattfindet;
eine Benutzer-ID eines angerufenen Teilnehmers, und wobei die Benutzer-ID des angerufenen Teilnehmers optional mindestens eine von einer MSISDN und einer IMSI des angerufenen Teilnehmers ist;
eine ID des WiFi-Zugangspunkts, mit dem die Benutzervorrichtung verbunden ist, und wobei die ID des WiFi-Zugangspunkts optional eine Medienzugriffssteuerungs-,MAC-,Adresse des WiFi-Zugangspunkts ist; und
eine ID einer 3GPP-Zelle, mit der die Benutzervorrichtung (32) verbunden ist oder vor dem Wechseln zum WiFi-Zugangspunkt (36) verbunden war.

6. Vorrichtung (20) nach einem der Ansprüche 1 bis 5, wobei der KPI und/oder der weitere KPI mindestens eines angibt/angeben von:
einem Anrufaufbauerfolg;
einer Anrufaufbauzeit;
einem Anrufabbruch; und
einer Anrufqualität.

7. Vorrichtung (20) nach einem der Ansprüche 1 bis 6, wobei das Entscheidungskriterium einen vorbestimmten Faktor von Sprachanrufen umfasst, die zum Trainieren des Vorhersagemodells verwendet werden, oder
wobei das Entscheidungskriterium einen vorbestimmten Faktor von Sprachanrufen einer spezifischen Benutzer-ID eines Benutzers der Benutzervorrichtung (32) umfasst, wobei der vorbestimmte Faktor von Sprachanrufen zum Trainieren des Vorhersagemodells verwendet wird.

8. Vorrichtung (20) nach Anspruch 7, wobei die Anweisungen derart konfiguriert sind, dass eine Anzahl von Sprachanrufen, die zum Trainieren des Vorhersagemodells verwendet wird, überwacht wird und der vorbestimmte Faktor auf der Basis der Anzahl derart festgelegt wird, dass der vorbestimmte Faktor mit zunehmender Anzahl von Sprachanrufen, die zum Trainieren des Vorhersagemodells verwendet werden, abnimmt.

9. Verfahren zur Einleitung eines Sprachanrufs in einem Mobilkommunikationsnetzwerk, wobei das Verfahren von einer Vorrichtung (20) durchgeführt wird, die zum Einleiten eines Sprachanrufs in einem Mobilkommunikationsnetzwerk konfiguriert ist, und das Verfahren umfasst:
Erkennen (2), dass eine Benutzervorrichtung (32) einen Anrufversuch zum Einleiten eines Sprachanrufs über das Mobilkommunikationsnetzwerk durchführt, während sie mit einem WiFi-Zugangspunkt (36) drahtlos verbunden ist;
Bestimmen (4) mindestens eines Anrufversuchsparameters, der eine Situation und/oder eine Umgebung angibt, in welcher der Anrufversuch durchgeführt wird;
Entscheiden (6), ob der einzuleitende Sprachanruf zwangsweise zum Trainieren eines Vorhersagemodells verwendet werden soll, basierend auf einem Entscheidungskriterium;
falls entschieden wird, dass der Sprachanruf zwangsweise zum Trainieren des Vorhersagemodells verwendet werden soll:
- Einleiten (8) des Sprachanrufs über den WiFi-Zugangspunkt (36) als einen Sprache-über-WiFi- , VoWiFi-,Anruf,
- Ableiten (10) mindestens eines Hauptleistungsindikators, KPI, aus dem durchgeführten Sprachanruf, und
- Bereitstellen (12) des mindestens einen Anrufversuchsparameters und des mindestens einen KPI für das Vorhersagemodell zum Trainieren des Vorhersagemodells; und
falls entschieden wird, dass der Sprachanruf nicht zwangsweise zum Trainieren des Vorhersagemodells verwendet werden soll:
- Entscheiden (14), ob der Sprachanruf über den WiFi-Zugangspunkt (36) oder über ein Funkzugangsnetzwerk (34) des Partnerschaftsprojekts der dritten Generation, 3GPP, durchgeführt werden soll, basierend auf dem mindestens einen Anrufversuchsparameter und durch Anwenden des Vorhersagemodells.

10. Verfahren nach Anspruch 9, ferner umfassend:
Erkennen, dass eine weitere Benutzervorrichtung eines angerufenen Teilnehmers drahtlos mit einem weiteren WiFi-Zugangspunkt verbunden ist;
Bestimmen mindestens eines weiteren Anrufversuchsparameters, der eine Situation und/oder eine Umgebung angibt, in welcher der Anrufversuch durchgeführt wird;
Entscheiden, ob der einzuleitende Sprachanruf zwangsweise zum Trainieren eines weiteren Vorhersagemodells verwendet werden soll, basierend auf einem weiteren Entscheidungskriterium;
falls entschieden wird, dass der Sprachanruf zwangsweise zum Trainieren des weiteren Vorhersagemodells verwendet werden soll:
- Auslösen des Empfangs des Sprachanrufs über den weiteren WiFi-Zugangspunkt als einen Spracheüber-WiFi-,VoWiFi-,Anruf,
- Ableiten mindestens eines weiteren Hauptleistungsindikators, KPI, aus dem durchgeführten Sprachanruf, und
- Bereitstellen des mindestens einen weiteren Anrufversuchsparameters und des mindestens einen weiteren KPI für das weitere Vorhersagemodell zum Trainieren des weiteren Vorhersagemodells; und
falls entschieden wird, dass der Sprachanruf nicht zwangsweise zum Trainieren des weiteren Vorhersagemodells verwendet werden soll:
- Entscheiden, ob der Sprachanruf über den weiteren WiFi-Zugangspunkt oder über ein weiteres Funkzugangsnetzwerk des Partnerschaftsprojekts der dritten Generation, 3GPP, empfangen werden soll, basierend auf dem mindestens einen weiteren Anrufversuchsparameter und durch Anwenden des weiteren Vorhersagemodells.

11. Verfahren nach Anspruch 9 oder 10, wobei der Schritt des Entscheidens, ob der Sprachanruf über den WiFi-Zugangspunkt (36) oder über das 3GPP-Funkzugangsnetzwerk (34) durchgeführt werden soll, umfasst:
Bestimmen eines Vorhersagewerts für mindestens einen der KPIs, wobei basierend auf dem Vorhersagewert entschieden wird, ob der Sprachanruf über den WiFi-Zugangspunkt (36) oder über das 3GPP-Funkzugangsnetzwerk (34) durchgeführt werden soll.

12. Verfahren nach einem der Ansprüche 9 bis 11, ferner umfassend, falls entschieden wird, dass der Sprachanruf nicht zwangsweise zum Trainieren des Vorhersagemodells verwendet werden soll, und falls entschieden wird, dass der Sprachanruf über den WiFi-Zugangspunkt (36) durchgeführt werden soll:
Einleiten des Sprachanrufs über den WiFi-Zugangspunkt als einen Sprache-über-WiFi-,VoWiFi-,Anruf,
Ableiten mindestens eines Hauptleistungsindikators, KPI, aus dem durchgeführten Sprachanruf; und
Bereitstellen des mindestens einen Anrufversuchsparameters und des mindestens einen KPI für das Vorhersagemodell zum Trainieren des Vorhersagemodells.

13. Verfahren nach einem der Ansprüche 9 bis 12, wobei der mindestens eine Anrufversuchsparameter und/oder der mindestens eine weitere Anrufversuchsparameter einen oder mehrere der folgenden Parameter umfasst/umfassen:
eine Benutzer-ID, die zum Identifizieren eines Benutzers der Benutzervorrichtung (32) geeignet ist, und wobei die Benutzer-ID optional mindestens eine von einer MSISDN und einer internationalen Mobilteilnehmerkennung, IMSI, ist;
eine Vorrichtungs-ID, die zum Identifizieren der Benutzervorrichtung (32) geeignet ist, und wobei die Vorrichtungs-ID optional mindestens eine von einer internationalen Mobilgerätekennung, IMEI, und einem IMEI-Typ-Zuweisungscode, TAC, ist;
einen Softwaretyp und/oder eine Softwareversion eines Betriebssystems der Benutzervorrichtung (32);
einen Zeitindikator, der eine Zeit angibt, zu welcher der Anrufversuch stattfindet;
eine Benutzer-ID eines angerufenen Teilnehmers, und wobei die Benutzer-ID des angerufenen Teilnehmers optional mindestens eine von einer MSISDN und einer IMSI des angerufenen Teilnehmers ist;
eine ID des WiFi-Zugangspunkts (36), mit dem die Benutzervorrichtung verbunden ist, und wobei die ID des WiFi-Zugangspunkts optional eine Medienzugriffssteuerungs-,MAC-,Adresse des WiFi-Zugangspunkts (36) ist; und
eine ID einer 3GPP-Zelle, mit der die Benutzervorrichtung (32) verbunden ist oder vor dem Wechseln zum WiFi-Zugangspunkt verbunden war.

14. Computerprogrammprodukt, umfassend Programmcodeabschnitte zum Ausführen der Schritte nach einem der Ansprüche 9 bis 13, wenn das Computerprogrammprodukt auf einer oder mehreren Verarbeitungsvorrichtungen ausgeführt wird.

15. Computerprogrammprodukt nach Anspruch 14, gespeichert auf einem oder mehreren computerlesbaren Aufzeichnungsmedien.

## Revendications

1. Dispositif (20) configuré pour initier un appel vocal dans un réseau de communication mobile, le dispositif (20) comprenant :
une interface de réseau (22) qui est apte à coupler, de manière à pouvoir communiquer, le dispositif (20) au réseau de communication mobile ;
un processeur (24) ; et
une mémoire (26) contenant des instructions exécutables par le processeur (24) pour amener le dispositif (20) à :
détecter qu'un dispositif utilisateur (32) réalise une tentative d'appel pour initier un appel vocal sur le réseau de communication mobile tout en étant relié sans fil à un point d'accès Wi-Fi (36) ;
déterminer au moins un paramètre de tentative d'appel indiquant une situation et/ou un environnement dans lesquels la tentative d'appel est réalisée ;
décider, sur la base d'un critère de décision, si l'appel vocal à initier doit être forcé à être utilisé pour entraîner un modèle de prédiction ;
s'il est décidé que l'appel vocal doit être forcé à être utilisé pour entraîner le modèle de prédiction :
- initier l'appel vocal sur le point d'accès Wi-Fi (36) en tant qu'un appel de voix sur Wi-Fi, VoWiFi,
- dériver au moins un indicateur clé de performance, KPI, à partir de l'appel vocal réalisé, et
- fournir l'au moins un paramètre de tentative d'appel et l'au moins un KPI au modèle de prédiction pour entraîner le modèle de prédiction ; et
s'il est décidé que l'appel vocal ne doit pas être forcé à être utilisé pour entraîner le modèle de prédiction :
- décider, sur la base de l'au moins un paramètre de tentative d'appel et par l'application du modèle de prédiction, si l'appel vocal doit être réalisé sur le point d'accès Wi-Fi (36) ou sur un réseau d'accès radio de projet de partenariat de troisième génération, 3GPP, (34).

2. Dispositif (20) selon la revendication 1, dans lequel les instructions amènent en outre le dispositif (20) à :
détecter qu'un autre dispositif utilisateur d'un appelé est relié sans fil à un autre point d'accès Wi-Fi ;
déterminer au moins un autre paramètre de tentative d'appel indiquant une situation et/ou un environnement dans lesquels la tentative d'appel est réalisée ;
décider, sur la base d'un autre critère de décision, si l'appel vocal à initier doit être forcé à être utilisé pour entraîner un autre modèle de prédiction ;
s'il est décidé que l'appel vocal doit être forcé à être utilisé pour entraîner l'autre modèle de prédiction :
- déclencher une réception de l'appel vocal sur l'autre point d'accès Wi-Fi en tant qu'un appel de voix sur Wi-Fi, VoWiFi,
- dériver au moins un autre indicateur clé de performance, KPI, à partir de l'appel vocal réalisé, et
- fournir l'au moins un autre paramètre de tentative d'appel et l'au moins un autre KPI à l'autre modèle de prédiction pour entraîner l'autre modèle de prédiction ; et
s'il est décidé que l'appel vocal ne doit pas être forcé à être utilisé pour entraîner l'autre modèle de prédiction :
- décider, sur la base de l'au moins un autre paramètre de tentative d'appel et par l'application de l'autre modèle de prédiction, si l'appel vocal doit être reçu sur l'autre point d'accès Wi-Fi ou sur un autre réseau d'accès radio de projet de partenariat de troisième génération, 3GPP.

3. Dispositif (20) selon la revendication 1 ou 2, dans lequel les instructions sont configurées de sorte que l'étape de la décision si l'appel vocal doit être réalisé sur le point d'accès Wi-Fi (36) ou sur le réseau d'accès radio 3GPP (34) comprenne :
la détermination d'une valeur de prédiction pour au moins l'un des KPI, dans lequel il est décidé, sur la base de la valeur de prédiction, si l'appel vocal doit être réalisé sur le point d'accès Wi-Fi (36) ou sur le réseau d'accès radio 3GPP (34).

4. Dispositif (20) selon l'une quelconque des revendications 1 à 3, dans lequel les instructions amènent en outre le dispositif (20) à, s'il est décidé que l'appel vocal ne doit pas être forcé à être utilisé pour entraîner le modèle de prédiction et s'il est décidé que l'appel vocal doit être réalisé sur le point d'accès Wi-Fi (36) :
initier l'appel vocal sur le point d'accès Wi-Fi (36) en tant qu'un appel de voix sur Wi-Fi, VoWiFI ;
dériver au moins un indicateur clé de performance, KPI, à partir de l'appel vocal réalisé ; et
fournir l'au moins un paramètre de tentative d'appel et l'au moins un KPI au modèle de prédiction pour entraîner le modèle de prédiction.

5. Dispositif (20) selon l'une quelconque des revendications 1 à 4, dans lequel l'au moins un paramètre de tentative d'appel et/ou l'au moins un autre paramètre de tentative d'appel comprennent un ou plusieurs parmi les paramètres suivants :
un identifiant d'utilisateur apte à identifier un utilisateur du dispositif utilisateur (32), et, facultativement, dans lequel l'identifiant d'utilisateur est au moins l'un parmi un MSISDN et une identité internationale d'abonné mobile, IMSI ;
un identifiant de dispositif apte à identifier le dispositif utilisateur (32), et, facultativement, dans lequel l'identifiant de dispositif est au moins l'un parmi une identité internationale d'équipement mobile, IMEI, et un code d'allocation de type, TAC, IMEI ;
un type logiciel et/ou une version logicielle d'un système d'exploitation du dispositif utilisateur (32) ;
un indicateur de temps indiquant un temps auquel la tentative d'appel intervient ;
un identifiant d'utilisateur d'un appelé et, facultativement, dans lequel l'identifiant d'utilisateur de l'appelé est au moins l'un parmi un MSISDN et une IMSI de l'appelé ;
un identifiant du point d'accès Wi-Fi auquel le dispositif utilisateur est relié et, facultativement, dans lequel l'identifiant du point d'accès Wi-Fi est une adresse de commande d'accès au support, MAC, du point d'accès Wi-Fi ; et
un identifiant d'une cellule 3GPP à laquelle le dispositif utilisateur (32) est relié ou a été relié avant de changer au point d'accès Wi-Fi (36).

6. Dispositif (20) selon l'une quelconque des revendications 1 à 5, dans lequel le KPI et/ou l'autre KPI sont indicatifs d'au moins l'un parmi :
une réussite d'établissement d'appel ;
un temps d'établissement d'appel ;
un abandon d'appel ; et
une qualité d'appel.

7. Dispositif (20) selon l'une quelconque des revendications 1 à 6, dans lequel le critère de décision comprend un facteur prédéterminé d'appels vocaux qui sont utilisés pour entraîner le modèle de prédiction ou dans lequel le critère de décision comprend un facteur prédéterminé d'appels vocaux d'un identifiant d'utilisateur particulier d'un utilisateur du dispositif utilisateur (32), dans lequel le facteur prédéterminé d'appels vocaux est utilisé pour entraîner le modèle de prédiction.

8. Dispositif (20) selon la revendication 7, dans lequel les instructions sont configurées de sorte qu'un nombre d'appels vocaux utilisés pour entraîner le modèle de prédiction soit surveillé et le facteur prédéterminé soit réglé sur la base dudit nombre, de sorte que le facteur prédéterminé diminue avec un nombre croissant d'appels vocaux utilisés pour entraîner le modèle de prédiction.

9. Procédé pour initier un appel vocal dans un réseau de communication mobile, le procédé étant réalisé par un dispositif (20) configuré pour initier un appel vocal dans un réseau de communication mobile et le procédé comprenant :
la détection (2) qu'un dispositif utilisateur (32) réalise une tentative d'appel pour initier un appel vocal sur le réseau de communication mobile tout en étant relié sans fil à un point d'accès Wi-Fi (36) ;
la détermination (4) d'au moins un paramètre de tentative d'appel indiquant une situation et/ou un environnement dans lesquels la tentative d'appel est réalisée ;
la décision (6), sur la base d'un critère de décision, si l'appel vocal à initier doit être forcé à être utilisé pour entraîner un modèle de prédiction ;
s'il est décidé que l'appel vocal doit être forcé à être utilisé pour entraîner le modèle de prédiction :
- l'initiation (8) de l'appel vocal sur le point d'accès Wi-Fi (36) en tant qu'un appel de voix sur Wi-Fi, VoWiFi,
- la dérivation (10) d'au moins un indicateur clé de performance, KPI, à partir de l'appel vocal réalisé, et
- la fourniture (12) de l'au moins un paramètre de tentative d'appel et de l'au moins un KPI au modèle de prédiction pour entraîner le modèle de prédiction ; et
s'il est décidé que l'appel vocal ne doit pas être forcé à être utilisé pour entraîner le modèle de prédiction :
- la décision (14), sur la base de l'au moins un paramètre de tentative d'appel et par l'application du modèle de prédiction, si l'appel vocal doit être réalisé sur le point d'accès Wi-Fi (36) ou sur un réseau d'accès radio de projet de partenariat de troisième génération, 3GPP, (34).

10. Procédé selon la revendication 9, comprenant en outre :
la détection qu'un autre dispositif utilisateur d'un appelé est relié sans fil à un autre point d'accès Wi-Fi ;
la détermination d'au moins un autre paramètre de tentative d'appel indiquant une situation et/ou un environnement dans lesquels la tentative d'appel est réalisée ;
la décision, sur la base d'un autre critère de décision, si l'appel vocal à initier doit être forcé à être utilisé pour entraîner un autre modèle de prédiction ;
s'il est décidé que l'appel vocal doit être forcé à être utilisé pour entraîner l'autre modèle de prédiction :
- le déclenchement d'une réception de l'appel vocal sur l'autre point d'accès Wi-Fi en tant qu'un appel de voix sur Wi-Fi, VoWiFi,
- la dérivation d'au moins un autre indicateur clé de performance, KPI, à partir de l'appel vocal réalisé, et
- la fourniture de l'au moins un autre paramètre de tentative d'appel et de l'au moins un autre KPI à l'autre modèle de prédiction pour entraîner l'autre modèle de prédiction ; et
s'il est décidé que l'appel vocal ne doit pas être forcé à être utilisé pour entraîner l'autre modèle de prédiction :
- la décision, sur la base de l'au moins un autre paramètre de tentative d'appel et par l'application de l'autre modèle de prédiction, si l'appel vocal doit être reçu sur l'autre point d'accès Wi-Fi ou sur un autre réseau d'accès radio de projet de partenariat de troisième génération, 3GPP.

11. Procédé selon la revendication 9 ou 10, dans lequel dans lequel l'étape de la décision si l'appel vocal doit être réalisé sur le point d'accès Wi-Fi (36) ou sur le réseau d'accès radio 3GPP (34) comprend :
la détermination d'une valeur de prédiction pour au moins l'un des KPI, dans lequel il est décidé, sur la base de la valeur de prédiction, si l'appel vocal doit être réalisé sur le point d'accès Wi-Fi (36) ou sur le réseau d'accès radio 3GPP (34).

12. Procédé selon l'une quelconque des revendications 9 à 11, comprenant en outre, s'il est décidé que l'appel vocal ne doit pas être forcé à être utilisé pour entraîner le modèle de prédiction et s'il est décidé que l'appel vocal doit être réalisé sur le point d'accès Wi-Fi (36) :
l'initiation de l'appel vocal sur le point d'accès Wi-Fi (36) en tant qu'un appel de voix sur Wi-Fi, VoWiFI ;
la dérivation d'au moins un indicateur clé de performance, KPI, à partir de l'appel vocal réalisé ; et
la fourniture de l'au moins un paramètre de tentative d'appel et de l'au moins un KPI au modèle de prédiction pour entraîner le modèle de prédiction.

13. Procédé selon l'une quelconque des revendications 9 à 12, dans lequel l'au moins un paramètre de tentative d'appel et/ou l'au moins un autre paramètre de tentative d'appel comprennent un ou plusieurs parmi les paramètres suivants :
un identifiant d'utilisateur apte à identifier un utilisateur du dispositif utilisateur (32), et, facultativement, dans lequel l'identifiant d'utilisateur est au moins l'un parmi un MSISDN et une identité internationale d'abonné mobile, IMSI ;
un identifiant de dispositif apte à identifier le dispositif utilisateur (32), et, facultativement, dans lequel l'identifiant de dispositif est au moins l'un parmi une identité internationale d'équipement mobile, IMEI, et un code d'allocation de type, TAC, IMEI ;
un type logiciel et/ou une version logicielle d'un système d'exploitation du dispositif utilisateur (32) ;
un indicateur de temps indiquant un temps auquel la tentative d'appel intervient ;
un identifiant d'utilisateur d'un appelé et, facultativement, dans lequel l'identifiant d'utilisateur de l'appelé est au moins l'un parmi un MSISDN et une IMSI de l'appelé ;
un identifiant du point d'accès Wi-Fi (36) auquel le dispositif utilisateur est relié et, facultativement, dans lequel l'identifiant du point d'accès Wi-Fi est une adresse de commande d'accès au support, MAC, du point d'accès Wi-Fi (36) ; et
un identifiant d'une cellule 3GPP à laquelle le dispositif utilisateur (32) est relié ou a été relié avant de changer au point d'accès Wi-Fi.

14. Produit de programme informatique comprenant des parties de code de programme pour réaliser les étapes selon l'une quelconque des revendications 9 à 13 lorsque le produit de programme informatique est exécuté sur un ou plusieurs dispositifs de traitement.

15. Produit de programme informatique selon la revendication 14, stocké sur un ou plusieurs supports d'enregistrement lisibles par ordinateur.
